# EUROPEAN PATENT APPLICATION

(11) **EP 4 670 824 A1**
(43) Date of publication of application: **31.12.2025**
(21) Application number: 24382679.9
(22) Date of filing: 24.06.2024
(51) Int. Cl.: B01D 53/62, B01D 53/83

(54) **METHOD OF CAPTURING CO2 USING PACKED BEDS OF SOLID PIECES OF CA(OH)2 AND DEVICE TO CARRY OUT THE METHOD**

(71) Applicant: Consejo Superior de Investigaciones Científicas (CSIC), 28006 Madrid (ES)
(72) Inventor: Abanades Garcia, Juan Carlos, 28006 Madrid (ES)
(74) Representative: Pons IP

(57) **Abstract**

This invention discloses a method of capturing CO₂ from air (or other gases containing less than 5%v CO₂) by contacting it with porous solid pieces of Ca(OH)₂ (i.e. solid particles of 1-50 mm equivalent diameter or solid packings such as Raschig rings with 2-10 mm wall thickness), arranged in at least one packed bed inside an air contactor so that the cross-section of the packed bed(s) occupies an entire cross-section of the air contactor. The method involves design tools to select the correct dimensions of the solids, the packed bed and the air contactor so that when the air contactor inlet is exposed to local winds, or blown by fans at 0.2-2.5 m/s, the pressure drop of the air through the packed bed is below a certain target between 10-500 Pa, with the lowest pressure range allowing passive carbonation of the solids without the need of fans.

## Description

### OBJECT OF THE INVENTION

This invention discloses a method of capturing CO₂ from air (or other gases containing less than 5%v CO₂) using solid pieces of Ca(OH)₂ arranged in at least one packed bed of said material inside an air contactor, so as to form CaCOs. The carbonated solids are discharged and recycled to extract pure CO₂ and regenerate the Ca(OH)₂ solid pieces.

### BACKGROUND OF THE INVENTION

Direct Air Capture of CO₂, DAC, is emerging as a major climate change mitigation tool, because it can be part of negative emissions system of CO₂ (when the captured CO₂ is permanently stored) or supply sustainable CO₂ to processes to manufacture synthetic carbon-based fuels and chemicals from renewable energy.

CO₂ from air is captured in air contactors, which are devices where the air is put in an intimate contact with a surface of a functional material (solid or liquid) that has an affinity to react with CO₂. The air contactors can adopt a variety of 3D shapes and sizes, but are usually very large devices when they need to treat the necessary flow of air (i.e. over 50000 Nm³/s) to capture climate-relevant quantities of CO₂ (for example 1 MtCO₂/y), because air contains barely 0.9 g of CO₂ per m3. For example, assuming a shape for the air contactor of a rectangular hexahedron with dimensions HxLxD, with H being the air contactor height, L the long length and D the depth (or short length, without taking into account the additional dimension required to streamline airflows, that is empty of chemically active surfaces), it is not uncommon in the state of the art to have air inlets and outlets faces (HxL) of well over 20000 m². Such vast surface needs to be blown by fans. In order to limit energy requirements of the fans, as needed to overcome the pressure drop of the air through the air contactor to well below 500 Pa, there is usually a need to moderate the air inlet velocities (or referred to the cross-section HxL of the air contactor) to between 1-5 m/s (National Academies of Sciences, Engineering and Medicine 2019. Chapter 5 in "Negative Emissions Technologies and Reliable Sequestration: A Research Agenda". Washington, DC: The National Academies Press. https://doi.org/10.17226/25259). Attending now to the depth of the air contactor (D of several m have been reported in the state-of-the-art) it is evident that HxLxD is always a huge volume when targeting 1MtCO2/year, and therefore, the specific cost of the functional material used inside the air contactor to react with CO₂ must be as low as possible.

As reviewed in WO2024017935A1, the use of dry porous Ca(OH)₂ solids as functional materials to capture CO₂ inside an air contactor device is gaining attention because of the low specific cost of Ca(OH)₂ respect to other solid sorbents of CO₂, because of the very large CO₂ absorption capacity and favourable kinetics of these solids (when allowed to react with humid air) and because Ca(OH)₂ (slaked lime) is a non-hazardous industrial commodity, used in the construction industry from Roman times. Criado and Abanades (Ind. Eng. Chem. Res. 2022, 61, 40, 14804-14812, "Carbonation Rates of Dry Ca(OH)2 Mortars for CO2 Capture Applications at Ambient Temperatures", https://doi.org/10.1021/acs.iecr.2c01675) have experimentally measured the carbonation rates of porous mortars, pellets, and extruded solid forms of Ca(OH)₂ at conditions relevant for direct air capture applications. The evolution of the carbonation fronts with time was found to obey Fick's diffusion law when corrected with a tortuosity factor following Bruggeman equation. No fitting parameter is needed to fit the carbonation rates of porous Ca(OH)₂ solids when diffusivity of CO₂ in air (0.000016 m²/s), the internal porosity of the Ca(OH)₂ solids (between 0.2 and 0.8) and the values of true molar densities of Ca(OH)₂ (29900 mol/m³) and CaCOs (27100 mol/m³) are taken into account. Furthermore, molar conversions in the carbonated layers were high, between 0.6-0.9, when the air had a relative humidity above 50% (which is very common in many parts of the world, including coastal locations in arid countries).

Nikulshina et al. ("Kinetic analysis of the carbonation reactions for the capture of CO2 from air via the Ca(OH)2-CaCO3-CaO solar thermochemical cycle", Chemical Engineering Journal 129 (2007) 75-83) investigated the carbonation of CaO and Ca(OH)₂ at 200-450 °C as part of a process concept involving a carbonator reactor, a slaker of CaO to Ca(OH)₂ and a calciner to extract pure CO₂ from CaCOs.

Morales-Florez et al. (Hydration and carbonation reactions of calcium oxide by weathering: Kinetics and changes in the nanostructure. Chem. Eng. J. 2015, 265, 194-200) conceptually proposed the use of trays containing a thin layer of CaO, that first hydrates to Ca(OH)₂ in contact with humid air, and then captures CO₂ to form CaCOs in contact times with the atmosphere up to 1000 hours.

Erans et al. (Carbonation of lime-based materials under ambient conditions for direct air capture. J. Clean. Prod. 2020, 242, 118330) also investigated the carbonation of CaO and Ca(OH)₂ dry powders under ambient conditions with the solids arranged in a thin layer (~5 mm) on a tray, with the solids reaching a maximum carbonation conversion of the Ca(OH)₂ to CaCOs of between 0.7-0.8, after 300-600 hours of exposure to ambient humid air.

Abanades et al., (An air CO2 capture system based on the passive carbonation of large Ca(OH)2 structures, Sust. Energ. & Fuels, 2020, 4, 3409-3417) have proposed a full direct air capture system relying on the passive carbonation of large stationary structures of Ca(OH)₂ (i.e. stacked plates of dry Ca(OH)₂ mortars). They report rates of carbonation where CO₂ diffusion in the pores of Ca(OH)2 solids is controlling the overall rate of carbonation. For example, a plate of 30 mm thickness would be fully carbonated when the two sides of the plate are exposed to air during 6 months. This slow carbonation process translates into air contactors with total volumes (HxLxD), to accommodate the internal carbonating structures, that are two order of magnitude larger than the volume of an equivalent air contactor using in state-of-the-art technologies (i.e. those using solvents or sorbents as reviewed in the NES report of 2019 cited above to capture the same quantity of CO₂ per year). However, they claim that such passive carbonation structures can still be economically competitive for DAC applications due to the low cost of the Ca(OH)₂ mortar and the low cost and simplicity of the internal structure of the air contactor (stacked plates of mortar separated by a certain distance to allow air flow between plates), allowing for large inventories of carbonating solids in locations with sufficient wind resources. Note that the average dynamic pressures produced by local winds at velocities around 10 m/s (which are frequent in many parts of the world) when hitting a vertical wall would be about 60 Pa. This is sufficient to achieve sufficient air velocities in the flat air channels formed between two plates, as needed to supply the CO₂ to the slowly carbonating plates.

US2022347650A1 discloses a full system to capture CO₂ from the atmosphere relying on passive carbonation alkaline metals, including Ca-based materials, arranged in a number of carbonation plots that can be considered for the purpose of this patent as a type of air contactor, that can have different geometry but retain the features of the example above (i.e. the characteristic dimension HxDxL). WO2022/187336 defines a related system including the capture CO₂ by Ca(OH)₂ powder (of less than 75 micron) as "carbonation medium". Said powder is arranged on top of trays, forming shallow packed beds (or "sheets") of a thickness or bed length of between 0.5 to 10 mm. The rate of carbonation of Ca(OH)₂ solids in such trays is claimed to be enhanced by adding a water stream (0.01 to 0.5 milliliters per gram of solids) to the carbonation medium at intervals of about 30 minutes to 72 hours. In the same family of methods and air contactors, WO2024011170A1 discloses systems, devices and methods to move the trays, disperse the liquid towards the trays or stir the solids in the trays. The trays are stacked in shelves and the air can move freely between the trays. The document is silent about the level of air bypass between the stacks of shelves, as most of the air contactor volume seems to be occupied by such space between shelves, that will offer a much lower resistance to the passage of air than the air channels formed between two trays containing the shallow packed beds or "sheets" of solids in each shelve. Solid handling cost to manipulate a large number of trays filled up with thin sheets of solids, as needed in a large-scale system, may escalate the cost in such system.

WO2024017935A1 discloses an air contactor to carbonate Ca(OH)₂ solid forms that claims to succeed in reducing the air contactor volume (HxLxD) by stacking Ca(OH)₂ solid forms to fill up the entire air contactor volume and by arranging a counter current flow of said stacks of solids with the air. To minimise the pressure drop through the air contactor, the solid forms are stacked so as to form uniformly distributed air channels of 0.01-0.1 m of equivalent diameter or characteristic distance, with the walls of the air channels being the walls of the Ca(OH)₂ solid forms exposed to the airflow. The cost of manufacturing the solid forms and the solid handling cost to stack them, and to move them in the air contactor, are claimed to be recovered when the carbonated solid forms can be used as masonry units (for example when the Ca(OH)₂ solid forms are extruded as bricks).

WO2021111366A1 discloses a method to capture CO₂ from air using Ca(OH)₂ arranged as a thin coating layer (less than 2.5 cm thickness) on a substrate. Sheets or other forms of coated substrates are then transported to an air contactor to carbonate it in contact with air, and the carbonated forms are eventually removed from the air contactor (after 1-14 days) to then remove the carbonated form from the substrate and recycle the substrate.

Despite the differences between WO2024011170A1, WO2024017935A1 and WO2021111366A1 they all have in common the use of structured solid forms (for example trays, bricks or coated sheets) separated by a certain distance, to form air channels free of solids that minimize the pressure drop when the air passes through the air contactor depth. Also, in all previous methods and systems to capture CO₂ from the atmosphere as CaCO₃ formed by carbonation of Ca(OH)₂, the overall DAC system necessarily involves two major steps additional to the carbonation of Ca(OH)₂ porous solids in the air contactor: a step of extracting pure CO₂ from the CaCO₃ to form CaO (for example by oxy-calcination processes, electric calcination, acid/base wet methods, electrochemical processes, solar driven calciners or any other emerging alternative technology to decompose CaCO₃ into CaO and pure CO₂). There is also a need of an additional a step of hydration or slaking with water (or steam) of the CaO to Ca(OH)₂. Direct routes to obtain directly pure CO₂ and Ca(OH)₂ from CaCOs are also being disclosed (see for example WO2023147178A2) as well as novel processes (EP4378887A1) involving the direct reduction of CaCOs to form a syngas and CaO.

Also relevant for the purposes of this patent is to refer to the classic Ergun equation, that allows to calculate the pressure drop (in Pa) of the air moving through a randomly packed bed of a given length (m) in the direction of the air flow, with the packed bed formed by solid material in the form of particles, pebbles, extrudes or any other conformed or fragmented solid piece of material. The pressure drop is calculated with the Ergun equation as a function of the equivalent particle diameter (in m, defined in narrow particle diameter distributions as the square root of the product of the minimum and maximum diameters in the distribution), the air velocity in the packed bed (m/s) is referred to the cross-section of the bed perpendicular to the airflow, the porosity of the bed (i.e. the fraction of the volume of the bed free of solids), and the fluid properties (density and viscosity at a given temperature).

Also relevant for this invention is the state-of-the-art technologies to manufacture ceramic packing for randomly packed or structured absorption towers (i.e. Raschig rigs, Lessing rings, gross-partition rings, saddles of different geometries etc. as described in "Coker et al 2010, Chapter 14. Packed Towers, in Ludwig's Applied Process Design for Chemical and Petrochemical Plants; Elsevier"). Such packings are known to allow a high gas (or liquid)-solid contact surface while moderating the pressure drop of the fluids in their pass through the packed bed of solids in the column. This is because the high bed porosity and particle diameter (for example, from Table 14-1 of Coke et al 2010, for Raschig rings, the normal size can go up to 150 mm and porosities as high as 0.6-0.75, with wall thickness from 2mm to 15 mm). Extruded forms of Ca(OH)₂ have been recently reported in WO2024017935A1 (including "brick-shape" solid forms), with reduced solid porosity (0.25 to 0.4) but mechanical strength to self-sustain in the packed piles of bricks of up to 2 m tall is not yet demonstrated. EP0342588B1 uses extruded honeycomb bodies made of calcium compounds for acid gas removal. On the other hand, also relevant for this patent is the wide availability of gabions to form walls by packing stones, rocks, or sometimes sand and soil, for use in civil engineering, road building, and landscaping. Such gabions have a mesh or perforated surface fully permeable to air but with openings smaller than the diameter of the solid pieces so as to sustain them inside the gabion. The gabion has typically a dimension that is equivalent to a thickness of a wall.

From the previous review, it can be concluded that there is no yet a generally accepted method to capture CO₂ from the atmosphere using Ca(OH)₂ porous solids. The ideal method to capture CO₂ with Ca(OH)₂ porous solids should exploit the low specific cost (in terms of $/m3 of investment) of air contactor structures using low cost Ca(OH)₂ solids, simplify solid handling operations to minimize capital cost, avoid the need of frequent movements of solids inside or outside the air contactor to reduce operating cost and energy requirements, minimize air contactor volumes and minimize the energy requirements of by fans used to overcome the pressure drop of air through the air contactor and its internal structures. Ideally, such method should even allow passive carbonation without the need of fans, as long as there is no escalation of cost linked to the increased volumes of the air contactor (HxLxD) required in passive carbonation systems of Ca(OH)₂ to compensate for the slow diffusion rates of CO₂ to the Ca(OH)₂ contained in the air contactor.

### DESCRIPTION OF THE INVENTION

The invention discloses a method of capturing CO₂ from air, vitiated air or other gases containing less than 5%v CO₂ by contacting them at temperature below 50°C with dry porous solid pieces of Ca(OH)₂ to produce CaCOs and an air stream depleted in CO₂. Such solid pieces of Ca(OH)₂ need to be dry (i.e. no liquid water flooding their pores beyond the equilibrium water adsorbed on the internal surface of the pores of Ca(OH)₂) and the air or the gases reacting in the air contactor will preferably have a relative humidity as high as possible and over 50% to yield faster carbonation rates. The generic expression "solid pieces" is used here to be able to refer to a wide variety of shapes and sizes that will be defined in preferred embodiments of the invention depending on the application of the method. Hence, solid pieces can be solid particles manufactured from dry mortars of Ca(OH)₂, such as pebbles, pellets, extrudes or any other conformed or fragmented solid form that can be handled (for example by sieving) so as to create a batch of the Ca(OH)₂ dry porous material with an equivalent particle diameter, dₚ. Alternatively, the solids can be extruded or conformed forms with the shape of packing solid pieces, as those used in the state-of-the-art absorption towers (i.e. Raschig rigs, saddles or any other shapes known in the state-of-the-art to minimize the pressure drop of a fluid through the packed bed of solids while increasing the specific gas-solid contact surface in the packing). In all these cases, it is possible to define an equivalent diameter of the solids that is defined here as the dimension of the equivalent spheres (with the same properties of bulk porosity and density) needed to have a pressure drop in the packed bed (with the same bed porosity and the same fluid conditions and fluid velocity) than the packed bed of actual solid pieces. For simplicity, the pressure drop in any bed of solid pieces is assumed from this point to be governed by the Ergun equation when applied using the equivalent diameter, dₚ (i.e. in what follows, the equivalent diameter includes already the shape factor commonly used in calculations with Ergun's equation).

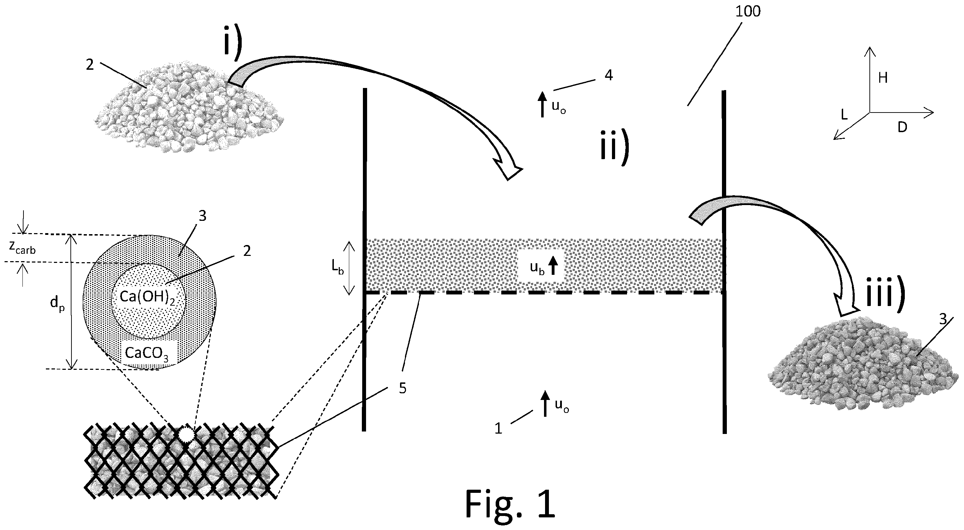

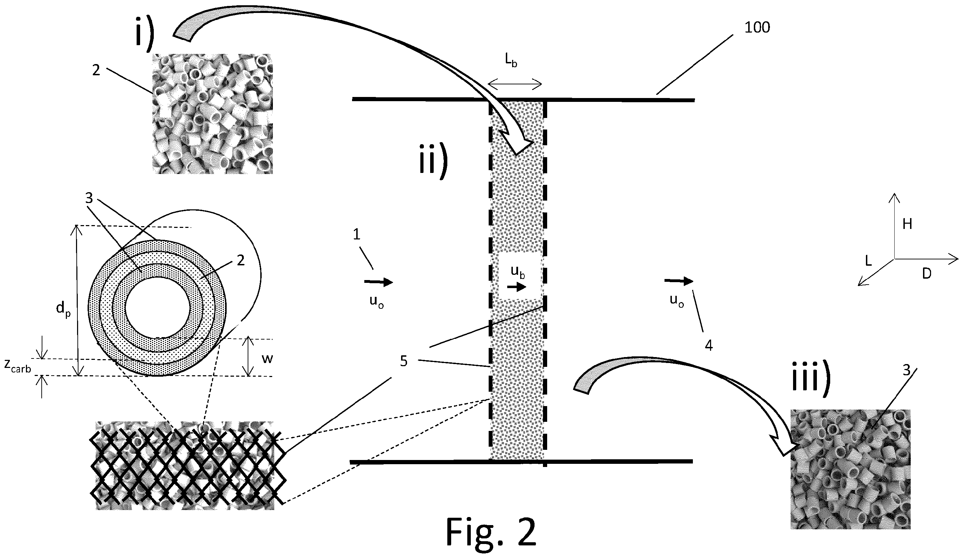

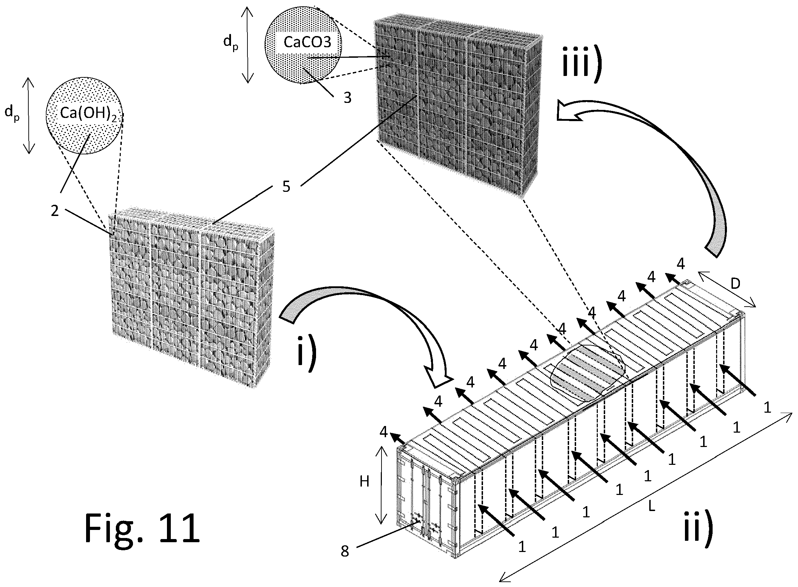

Regarding the reaction of CO₂ capture, and also for conciseness, we refer only to "air" from this point until preferred embodiments are specified for other gases different to air. As known in the state of the art, to allow sufficiently fast carbonation rates while maintaining mechanical integrity of the solid forms, it is preferred that the Ca(OH)₂ solid pieces have an internal pore structure with a volume fraction of open pores to the exterior of between 0.2 and 0.6. Such materials are able to reach maximum carbonation molar conversions of Ca(OH)₂ to CaCOs of 0.6-1 when given sufficient time in contact with air. Reference is made to the experiments and derived carbonation rate equations in Criado&Abanades (2022) to establish the time required for a carbonation front to reach a given thickness of the carbonated layer, z_{carb} (see particles in Figure 1 and 2) where the porous Ca(OH)₂ material has reached maximum carbonation. For spherical particles fully carbonated, the thickness of the carbonated layer is (dₚ/2). It is also known in the state-of-the-art how to estimate the rate of carbonation of spheres (or any other known shape of the particle) when knowing the rate of carbonation of a flat geometry.

As will be discussed below in more detail, when adapting carbonation models taking into account the geometry of the solid pieces of Ca(OH)₂, and when integrating such carbonation model with the Ergun equation for packed beds to account for the known constrains on pressure drop in an air contactor, a new method to capture CO₂ from air using packed beds of said Ca(OH)₂ solid pieces has been identified to have a superior performance and potentially lower cost than other CO₂ capture methods from air using Ca(OH)₂ materials for an air contactor with dimensions HxDxL, with H being the air contactor height, L the long air contactor length and D the air contactor depth in the direction of the air flow. The air velocity referred to an inlet cross-section of the air entering the contactor is u₀. Preferably, the inlet cross-section is the HxL section.

Thus, the invention relates to a method of capturing CO₂ from air, vitiated air or other gases containing less than 5%v CO₂ by contacting them at temperature below 50°C with porous solid pieces of Ca(OH)₂ to produce CaCOs, the method being characterized by the following steps being repeated at least once:
i) a step of arranging at least one packed bed of solid pieces of Ca(OH)₂ inside an air contactor comprising a volume of dimensions HxLxD, being H the height, L the length and D the depth of the air contactor so that the cross-section of the at least one packed bed of solid pieces of Ca(OH)₂ occupies an entire cross-section (HxL or HxD or LxD) of the air contactor, the entire cross-sections being the height x length section, the height x depth section or the length x depth section;
ii) a step of blowing air through one entire inlet cross-section of the entire cross-sections of the air contactor; and
iii) a step of discharging the at least one packed bed solids already carbonated as CaCOs solids after a residence time in the air contactor of between 1 day to 1 year.

The step of arranging at least one packed bed of solid pieces of Ca(OH)₂ inside the air contactor ensures that all the air entering the air contactor through one of the inlet sections will be forced to pass through the packed bed of solids (i.e. no bypass of air through the air contactor is allowed without going through the packed bed(s)) at velocity, u_{b} (note that in some preferred embodiments described below this velocity will be different to u₀). Therefore, the method is departing from the state-of-the-art solutions to moderate pressure drop in the air contactor, as adopted in US2022347650A1, WO2024017935A1 or WO2021111366A1. Surprising findings from an air contactor reactor model for packed beds of particles of Ca(OH)₂ porous solids as discussed in the detailed description, and new design of air contactor devices to carry out the method, will demonstrate that the air contactors containing packed beds of solid pieces of Ca(OH)₂ occupying the whole cross-section of the air contactor are smaller and less complex than those described in the state-of-the-art of CO₂ capture with Ca(OH)₂.
The wide range of residence times of the step of discharging the at least one packed bed solids already carbonated as CaCOs solids will depend on the choice of particle diameter and shapes of the solid pieces of Ca(OH)₂ and on the availability of pressure to blow the air (more than 500 Pa is considered uneconomic in the state of the art of direct air capture, because electricity consumption of, by example fans, escalates over 1GJₑ/tonneCO₂ captured from air). From the point of view of minimizing energy requirements to blow air through the packed bed arranged in the air contactor, larger solid pieces of Ca(OH)₂ (i.e. larger than 1 mm) are welcomed because they are linked to lower pressure drop of air passing through the packed bed. However, from the point of view of carbonation times, largest solid pieces (i.e. larger than 50 mm) are not welcomed because they demand for extremely long carbonation times (over one year) to achieve full conversion. The model described in the detailed description section will demonstrate that preferred embodiments exist when the solid pieces are solid particles of Ca(OH)₂ and the method further comprises an additional step of pre-screening particles of Ca(OH)₂ having an equivalent particle diameter between 1-50 mm and using them in the step of arranging at least one packed bed of solid pieces of Ca(OH)₂ inside an air contactor.

Likewise, the air contactor model described in the detailed description will demonstrate surprising benefits when the solid pieces packed in the air contactor resemble those used as packings in state-of-the-art absorption towers. Therefore, a preferred embodiment of the method further comprises an additional step of manufacturing by extrusion or any other solid conforming technique the solid pieces of Ca(OH)₂ in the form of Raschig rings or other packing forms with an equivalent diameter between 5-150 mm and a wall thickness between 2-10 mm.

The above methods are described referred to solid pieces with a certain equivalent particle diameter, dₚ, and characteristic wall thickness of carbonation, w. When a particle is solid and spherical or close to spherical, and is fully carbonated, w=dₚ/2, so that when a large dₚ is chosen to minimize pressure drop, such particles demand for longer times to achieve their maximum carbonation conversion. This problem is solved when using solid pieces such Raschig rings manufactured from Ca(OH)₂ mortars, where the particle diameter dₚ governs the pressure drop while the thickness of the carbonation layer, w, governs the carbonation time, so that both pressure drop and carbonation times can be minimized separately. As will be shown below in more detail, such feature offers substantial opportunities to design air contactors with large volumes of packed solids, with minimum pressure drop and short carbonation times, that can greatly reduce the solid handling efforts and therefore the cost respect to other methods to capture CO₂ from air using Ca(OH)₂ solids recited in the state-of-the-art. On the other hand, since the mechanical strength of such packing solid pieces manufactured with Ca(OH)₂ has not been demonstrated, and their cost is uncertain (in particular when considering the need of additives for extrusion and to enhance mechanical strength), it is also important to identify solutions to overcome the limitations of high pressure drop and/or high carbonation times when using of solid particles with a give dₚ as noted above.
Due to the need to moderate the power consumption for carrying out the step of blowing air (or even to avoid the need of a forced blowing air step to blow air through the bed of solids packed in the step of blowing air, the packing of solid pieces of Ca(OH)₂ in the step of arranging at least one packed bed of solid pieces of Ca(OH)₂ inside an air contactor needs to be done so as to form a bed with a packed bed length so that the pressure drop of the air through the packed bed formed in the step of arranging at least one packed bed of solid pieces of Ca(OH)₂ inside an air contactor at the velocity chosen for the step of blowing air is between 10 to 500 Pa. This is carried out when the step of blowing air through one entire cross-section of the entire cross-sections of the air contactor is carried out establishing a pressure drop of the air through the packed bed between 10 to 500 Pa. Depending on the geometry of the solid pieces of Ca(OH)₂ the packed bed of solid pieces of Ca(OH)₂ can be randomly packed, or packed in a more orderly or structured form to further minimize the pressure drop (at the expense of higher solid manufacturing and handling cost, as in structured absorption towers and packed bed reactors in the state-of-the-art).

Therefore, for a given value of pressure drop and air velocities, said packed bed length will be a function of the particle diameter and shape of the solid pieces of Ca(OH)₂ and the bed porosity. The Ergun equation can be used to adopt viable values of dₚ, u_{b} and L_{b} to fulfill this restriction, taking into account the typical porosities of the packed beds (for close to spherical factors the bed porosity is usually around 0.4 while for Raschig rings the porosity is usually between 0.65-0.7). The lower range of pressure drops (10-60 Pa) correspond to preferred embodiments relying on passive carbonation methods, without the need of, by example, air fans, wherein the step of blowing air is achieved by exposing to head winds an open air inlet face (HxL) of the air contactor. Typically, this will correspond to methods where the step of discharging the at least one packed bed solids already carbonated from the air contactor will be from a few months to a year. This is a consequence of the limited velocity of air (and hence the rate of supply of CO₂ to the carbonating solids) that will effectively pass through the bed of solids when the only positive pressure at the air contactor inlet is the dynamic pressure of the air (note that even when average head winds are as high as 10 m/s, the dynamic pressure is only about 60 Pa). It will be shown in examples of the detailed description of the invention that air velocities in passive carbonation applications of the method will barely be around 0.1 m/s.

In contrast, in preferred embodiments of the method using a forced step of blowing air, by example by fans, to force the air through to the air contactor, the pressure drop can increase up to 500 Pa and therefore the method further comprises that the step of blowing air is achieved using fans to blow air at velocities between 0.2-2.5 m/s through one entire cross-section of the air contactor, preferably being an open-air inlet cross-section, preferably the HxL cross-section of the air contactor. As will be shown below, the lower range of velocities correspond to the use of solid particles of Ca(OH)₂ where dₚ=w while the highest velocities (maintaining the same pressure drop) correspond to the use of solid pieces of Ca(OH)₂ (i.e. Raschig rings) where dₚ is decoupled from w, allowing larger particles in the bed (lower pressure drop) without compromising carbonation times.

Since air contactors usually treat large volumetric flows of air, they will have typically very large volumes, allowing handling operations in the interior of the air contactor when it comes to move in and out solids, or stacks of structures containing solids, and arranging them inside the air contactor. Indeed the step of arranging at least one packed bed of solid pieces of Ca(OH)₂ inside an air contactor can be carried out inside the air contactor (i.e. bringing the solid pieces to the interior of the air contactor to form the packed beds) or outside the air contactor (i.e. bringing pre-manufactured packed beds or stacks of packed beds or gabions to the air contactor). In a preferred embodiment, the step of arranging at least one packed bed of solid pieces of Ca(OH)₂ inside an air contactor is carried out using trays disposed in horizontal position along the air contactor and disposing a mesh or perforated surface in the bottom of each tray to sustain the bed of solid pieces of Ca(OH)₂. This is particularly useful to spread the weight of the solids in the air contactor to a multiplicity of packed beds, avoiding crushing of the solids in the bed when they are solid pieces of Ca(OH)₂ in the form of packing shapes (i.e. Raschig rings, etc.) with large equivalent diameters, dₚ, and relatively thin wall thickness, w, that will make them more prompt to crushing if packed in deep beds.

In other preferred embodiment the step of arranging at least one packed bed of solid pieces of Ca(OH)₂ inside an air contactor is carried out arranging vertically the bed of solid pieces of Ca(OH)₂ , standing on the floor of the air contactor as a gabion having two surfaces made with a mesh or perforated surface separated by a distance that coincides with the length of the packed bed, L_{b}, and preferably coincides with the depth of the packed bed of solids relevant for pressure drop calculations. As it is standard for packed and fluidised beds, the pressure drop of the air through such perforated surfaces of mesh should be negligible (a fraction of <10% of the pressure drop of the air in its passage through the bed of the length L_{b} meters of packed solids). In embodiments with a single packed bed inside the air contactor, the cross-section of the bed of solid pieces of Ca(OH)₂ is HxL and the length of the bed, L_{b} is a fraction of the total depth, D of the air contactor. This means that the packed bed of length, L_{b}, in meters, in a gabion standing on the floor with the solids confined by two perforated surface or mesh (of negligible thickness compared to the length of the bed, L_{b}, separated by the length of the bed, L_{b}, is facing directly the air entering the air contactor inlet (HxL), with the crossection of the packed bed coinciding with the air contactor inlet (HxL). Note that, in these type of single bed contactors, the air contactor may have additional features, known in the-state-of-the-art, that may increase its depth, D, respect to the value of the length of the bed, L_{b}: for example a certain additional depth to accommodate the needed distance between the fan and the beginning of the bed of solids to achieve a more laminar flow of air. Also, roof extensions to protect the bed of solids from the weather, or flaps or any other aerodynamic bodies to re-direct natural air flows from winds towards the cross-section of the bed of solids.

As will be shown below, the use of a single packed bed of length L_{b} to treat air at velocity u_{b} through the bed demands for specific solutions to solve the known limitation of packed beds when u_{b} needs to be kept very low to limit pressure drops, causing an inversely proportional increase in the air contactor cross-section, HxL, and hence on the cost of the air contactor fans. To solve such problem, in preferred embodiments, the disclosed method will use air contactors with particular designs to carry out the above methods, the air contactor comprising an air contactor inlet and an air contactor outlet and opening/closing gates to upload and discharge solids or stacks of solid pieces of Ca(OH)₂ to/from the air contactor, further comprising at least one mesh or perforated surface covering a full cross-section of the interior of the air contactor (HxD or LxD or HxL) and being divided in at least one pair of air channels free of solids, with each of the air channels in the pair being in contact with each of the sides of the bed of solid pieces of Ca(OH)₂ and said air channels being characterized by means to connect each air channel in one pair to only the air contactor inlet or only the air contactor outlet, so that when one air channel inlet is open and its air channel outlet is closed the other air channel in the pair has its air channel outlet open and its air channel inlet closed.

An air channel is understood in this invention as a part of the volume of the air contactor that is free of the packed bed of solids and that allows an air flow with negligible pressure drop (i.e. compared to the pressure drop through the packed bed of solids the pressure drop is <10%). Such air channels are connected at least to one air inlet or air outlet of the air contactor and confined by walls that can be one surface impermeable to air located in the interior of the air contactor, or one surface permeable to air (for example the top of a packed bed or the mesh or perforated plates used to confine the packed bed). The distance between the two shortest parallel walls of the air channel is defined as the width of the air channel, L_{c}. For simplicity, we ignore the contributions to the air contactor volume of bulk materials in the internal structure of the air contactor (i.e. beams, thickness of mesh or trays materials, etc.), to define preferred embodiments of said air contactor device made up of packed beds of length L_{b} and air channels of width L_{c}, the air contactor device comprises one of the air contactor inlet dimensions (H or L) being divided in a multiplicity of sections of equal length that results from the sum of the length of the bed of solid pieces of Ca(OH)₂, L_{b}, and the width of the air channel, L_{c}; while the other dimension of each one of the sections being the other inlet dimension (L or H, respectively)).

As will be shown below in the detailed description, the air contactor device preferred to carry out the methods of this invention comprises a depth, L_{b} between 0.5 to 5 m. Considering such bed as the bed that is active for the capture of CO₂, or in other words, the depth of the air contactor in which a longitudinal CO₂ concentration profile is develop in the direction of the air flow from the inlet to the outlet of the air contactor. Some examples discussed below use a particularly preferred dimension for such air contactor device when the depth of the bed L_{b} can be fitted in the 2.44 m of the depth of a shipping container. This is to facilitate the manufacture of such air contactor and its manipulation and handling, in particular when used in passive carbonation applications. The air contactor device described above, as other air contactors in the state-of-the-art, will have a major air inlet and outlets and means to introduce and discharge solids or structure containing them in/from the air contactor. Additionally, in some preferred embodiments the contactor device comprises means configured to close/open individual air channel inlets and outlets. This arrangement may be particularly useful to adapt to changing directions of wind (i.e. in particular if it changes 180° its direction) in applications of the method as a passive carbonation method. Although all the descriptions above refer to large scale, climate-relevant applications of CO₂ capture (i.e. at a rate for instance 1 MtonneCO₂/year), the above methods and devices are also applicable to the capture of CO₂ from vitiated air or flue gases with diluted CO₂ in their composition. Preferred methods further comprises a step of capturing CO₂ from vitiated air in buildings or other living spaces by directing said vitiated air to the air contactor inlets of the air contactor device as described above.

Such small, even domestic scale, would be useful to capture CO₂ as CaCOs followed by an additional step of transporting the resulting CaCOs to a centralised CO₂ extraction plant where Ca(OH)₂ is regenerated and transported back to the multiplicity of small scale CO₂ capture applications, for example from the inlet (or the outlet) of air ventilation systems installed in buildings, to avoid the build-up of CO₂ in the vitiated air in the building.

In general, it is claimed the method disclosed above in other applications further comprising a step of capturing CO₂ from flue gases with a CO₂ content below 1%volCO₂ at below 50°C by directing said flue gases to the air contactor inlets of the devices disclosed above. As discussed below, when there is an opportunity of intercooling the gases in the interior of the air contactor to maintain relative humidity over 50%, the method can also comprises a step of capturing CO₂, wherein the air, the vitiated air or the other gases containing less than 5%volCO₂ are flue gases with a CO₂ content between 1-5%volCO₂ further characterised by introducing steps of cooling or quenching with air or water the flue gases to less than 50°C before they enter the air contactor and when they reach between 70°C at any point in the interior of the air contactor. In general, applications of the method others than those described in more detailed below are also included in the description if they follow the steps of the method of claim 1. The applications where any of the independent properties of the Ca(OH)₂ solid pieces used in the examples of methods depart from the central values adopted in said detailed descriptions, figures and examples are also included.

### BRIEF DESCRIPTION OF THE DRAWINGS

A set of drawings is attached wherein, with illustrative and non-limiting character, the following has been represented:
Figure 1. shows a schematic of method, the air contactor elements and an example of solid pieces of Ca(OH)₂ in particle form with indication of the main notation used in the description.
Figure 2. as Figure 1 but with a vertical arrangement of the packed bed of solid pieces Ca(OH)2 (in this case as Raschig rings), requiring two mesh or perforated plate to confine the solids in the packed bed in the form of a gabion.
Figure 3. plots the time required to reach the maximum carbonation conversion of solid pieces of Ca(OH)₂ of different particle diameter, dₚ, or characteristic wall thickness, w, depending on the geometry factor, β, of the solid piece of Ca(OH)₂, using the kinetic model described in Criado&Abanades (2022). The porosity of the solids ε_{Ca(OH)2}=0.5, maximum molar conversion to CaCOs is Xₘₐₓ=0.7, tortuosity in the pores 1.47 and the average CO₂ concentration is 262 ppmv (as in a contactor with 0.7 capture efficiency and plug flow of air).
Figure 4. plots the pressure drop (Pa) calculated with the Ergun equation at an air velocity of 0.3 m/s (at 15°C) in a packed bed with a length L_{b}=0.5 m and a bed porosity of ε_{b}=0.4 as a function of particle diameter.
Figure 5. plots the pressure drop (Pa) calculated with the Ergun equation at different air velocities (at 15°C) in a packed bed with a length L_{b}=0.5 m and a bed porosity of ε_{b}=0.4 made up of particles of three equivalent diameters. In the crossing with the dotted line at 100 Pa, the carbonation time of the particles (in hours) is given as a label, at the conditions of Figure 3 with ε_{Ca(OH)2}=0.5.
Figure 6. solutions of the air contactor model as a function of air velocity when the packed bed contains solid particles as pieces of Ca(OH)₂.
Figure 7. illustration of the method when using a single packed bed of solid particles of Ca(OH)₂ arranged inside a shipping container, wherein Table 1 shown below is directed to numerical solutions of the design model for this case.Figure 8. solutions of the air contactor model as a function of air velocity when the packed bed contains pieces of Ca(OH)₂ suh as Raschig rigs with a certain diameter, dₚ, and a wall thickness, w, as those shown in Figure 2.
Figure 9. shows air contactors where the air velocity, u_{c}, in the air channels is larger (12 times in the Figure) than the air velocity through the bed, u_{b}, as well as other features to allow packed beds arranged horizontally (top figure) or vertically (demanding two mesh as in the bottom figure) in the air contactor.
Figure 10. shows air contactors as in Figure 8 with a multiplicity of packed beds, each surrounded by two air channels.
Figure 11. illustration of the method when using multiple packed beds of solid particles of Ca(OH)₂ arranged as a gabions inside a shipping container containing multiple 9 air channel inlets and 8+2x1/2 air channel outlets, wherein Table 1 shown below is directed to numerical solutions of the design model for this case.

### DETAIL DESCRIPTION OF THE INVENTION

Reference is made to the accompanying drawings to support the detail description of the method, devices to carry out the method and preferred embodiments and their examples. Figure 1 schematically represents the three steps of the method when using a generic air contactor device (100) to capture CO₂ from air (1) by putting it in contact with Ca(OH)₂ solids (2) to produce solids containing CaCOs (3) and an air stream depleted in CO₂ (4). The method relies on state-of-the-art methods to manufacture dry porous Ca(OH)₂ solids (2) in the form of solid pieces with adequate mechanical properties (i.e. crushing strength) to withstand without breaking the forces inside packed beds of said solid pieces of between 0.01 to 3 m height. Said solid pieces of porous Ca(OH)₂ can be the result of any process known in the state-of-the-art for conforming Ca(OH)₂ mortars. For example particles resulting from fragmentation and sieving of a pieces of dry mortar of Ca(OH)₂, or solid pieces resulting by extrusion of Ca(OH)₂ or pelletization of Ca(OH)₂ porous powders (as the Raschig packing shown in Figure 2). The later allows solid pieces to have forms different to spherical (i.e. solid cylinders, or saddles shapes, or Raschig rigs as those used as packings in absorption towers). Depending on the manufacture process, the porosity of the porous Ca(OH)₂ solid pieces will vary between 0.2-0.7. The packed bed can be arranged in a horizontal position as shown in Figure 1 using a mesh or perforated plate to support the weight of the bed. Alternatively, the bed can be arranged vertically as in Figure 2, contained by at least two perforated plates or mesh surfaces (5) permeable to airflows, as in gabions of stones and granulated solids, forming a wall of thickness L_{b} that is marked by the distance of the two flat sides of the packed bed of solids. The method is characterized by arranging at least one of such packed bed(s) of solid pieces of Ca(OH)₂ to cover a whole cross-section of the air contactor, so as to force air to flow through the packed bed of solid pieces with a lengh (L_{b}) in the direction of the air flow. With such arrangement, the method is departing from the state-of-the-art solutions to capture atmospheric CO₂ with Ca(OH)₂ solids (as in US2022347650A1, WO2024017935A1 or WO2021111366A1) where a variety of air channels free of solids connecting the air contactor inlet with the air contactor outlet are present. As will be disclosed below, this patent reveals surprisingly narrow sets of operating conditions where known problems in the applications of packed beds to direct air capture with Ca(OH)2 materials (mainly linked to the high pressure drop and energy requirements when treating the large flow rates needed for climate relevant applications) can be overcome. Preferred embodiments for a wide variety of conditions and materials are defined to exploit the simplicity and economic savings resulting when preparing a packed bed of a certain mass of solids as compared to structured packing strategies disclosed in the state of the art (stacked bricks or other solid forms of Ca(OH)2 with thin walls WO2024017935A1, stacked trays with thin layers of Ca(OH)₂ powder in US2022347650A1, flat supports coated with thin layers of Ca(OH)₂ in WO2024017935A1). Although the Figures and the detail description that follows are referring to direct CO₂ capture from air, it should be evident to the skilled in the art that the method can also be applied to other gas streams containing diluted CO₂ such as vitiated air (for example from the ventilation of a building) or flue gases with a content of CO₂ below 5%. However, and for simplicity, unless stated otherwise, we refer in the text that follows to air capture applications only (i.e. with an inlet CO₂ concentration corresponding to 450 ppm).

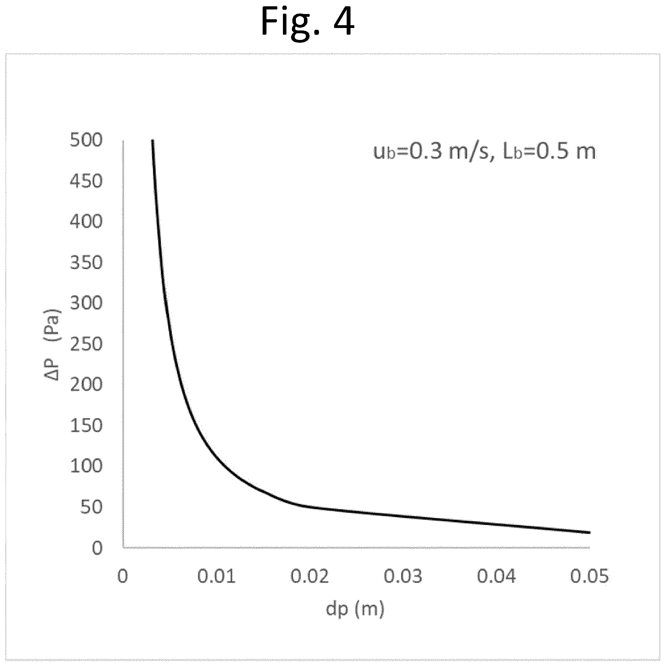

In order to define preferred embodiments, specific design choices need to be made on the type of Ca(OH)₂ solid pieces (solid particles vs packings pieces) and their dimensions (equivalent particle diameter, dₚ, wall thickness, w, porosity, ε_{Ca(OH)2} , maximum carbonation conversion, Xₘₐₓ) as well as bed properties (length L_{b} and bed porosity ε_{b}) and air contactor conditions (gas velocity at the air contactor inlet, uₒ, gas velocity in the packed bed, u_{b} (this will be different to u₀ in some embodiments as explained below), pressure drop in the packed bed ΔP). An air contactor model is needed to establish the relationships between these variables, incorporating the characteristic features and constrains of all CO₂ capture methods from air known in the state-of-the-art (for example, the need to limit ΔP to below 500Pa to keep energy requirements below 1 GJₑ/tonne of CO₂ captured). To this end, a simplified packed bed air contactor reactor model is disclosed to carry out the designs disclosed in this invention. The model is the result of integrating three components or submodels: a) a kinetic submodel to account for the contact time needed between the air and the Ca(OH)₂ solid pieces to achieve their maximum carbonation conversion (Xₘₐₓ); b) a method to estimate pressure drop of air when flowing through the packed bed; c) a carbon mass balance to estimate the quantity of CO₂ captured in the air contactor as CaCOs from the point in time in which the packed bed of solids pieces of Ca(OH)₂ is arranged inside the air contactor. The following paragraphs detail these submodel and Figures 4-7 provide examples of calculations in the range of conditions considered in the preferred embodiments of the method.

### a) Kinetic model of carbonation of porous solid pieces of Ca(OH)₂ in air.

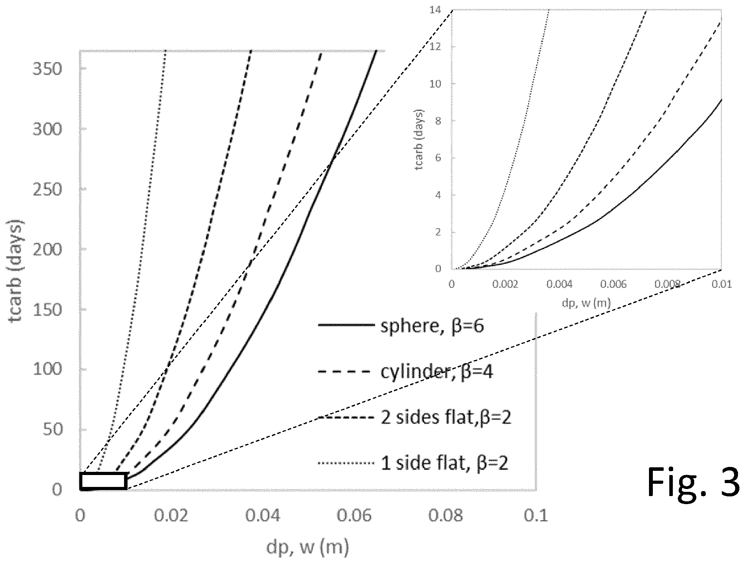

The target of this submodel is to estimate a time, t_{carb}, needed to achieve the maximum carbonate conversion (Xₘₐₓ) of a certain solid piece of porous Ca(OH)₂. Ideally, in order to maximize productivity of the air contactor, such time should be made to coincide with the time between step i) and step ii). This is because if solids are removed before that time they will be not totally converted. If they are removed after that time, the air will have been blown through a carbonated packed bed unable to capture more CO₂. The function for t_{carb} has been experimentally determined (Criado and Abanades, 2022) for flat plate geometries of porous Ca(OH)₂ solids carbonating only from one side (i.e. as those used in some Ca(OH)₂ contactors in the state of the art). The rate of carbonation is controlled by the diffusion of CO₂ in the carbonated product layer (z_{carb} in Figures 1 and 2). It is also known in the state-of-the art of gas-solid reaction engineering how to estimate t_{carb}, to different geometries of the reacting solids by introducing a geometry factor, β (which takes a value of 2 for one side carbonation, 4 for two sides carbonation, 6 for solid spheres, 4 for solid cylinders etc). Figure 3 plots some examples of calculations with this model. A first advantage of using spherical solid pieces of Ca(OH)₂ in a packed bed air contactor is that, for a given characteristic distance defining the thickness of the carbonation front, z_{carb}, the value of t_{carb} is 12 times shorter for spherical particles of diameter dₚ than for identical Ca(OH)₂ solids supported on a tray or coated on a non-porous flat support creating a layer or shallow packed beds as those disclosed in WO2022/187336 or WO2021111366A1 with a thickness or length identical to dₚ. Figure 3 represent the calculated time to reach full carbonation of solid pieces with a range of particle diameter, dₚ. or characteristic wall thickness for carbonation, w. In solid spherical particles dₚ=w. In other forms of solid pieces (i.e. a Raschig rings), w will typically be the wall thickness. Figure 3 also displays a zoom out of the t_{carb} function to illustrate a first benefit of using such packing-type solid pieces. As will be shown below in preferred embodiments, this will allow the decoupling carbonation times (governed by w) and pressure drop (governed by dₚ), yielding designs of a highly productive packed bed air contactor. For convenience we define here a group of variables a1= ρ_{Ca(OH)2} *(1-ε_{Ca(OH)2}))*Xₘₐₓ/(D_{CO2}* ε_{carb}*C_{CO2log} /τ that will be used in the model below, where: ρ_{Ca(OH)2} is the molar density of Ca(OH)₂ (29900 mol/m3), ε_{Ca(OH)2} is the void pore volume fraction of Ca(OH)₂) (assumed to be 0.5 for spherical particles (non extruded) and a lower ε_{Ca(OH)2}= 0.35 for Raschig type solid pieces because extrusion techniques to manufacture them are known to yield lower porosity solids), Xₘₐₓ is the maximum conversion of Ca(OH)₂ to CaCOs achieved in the carbonated layer (assumed to be 0.7 in all calculations); D_{CO2} (m²/s) is the diffusivity of CO₂ in air, ε_{Carb} is the void pore volume fraction in the carbonated solid layer (z_{carb}) of the solid pieces, C_{CO2log} (in mol/m³) is the average volume concentration of CO₂ in the exterior of the particle (film diffusion resistances are omitted for simplicity, and for being negligible in the larger particles that will be considered in this method) and τ is the pore tortuosity calculated according to the Bruggeman approximation and τ=1/( ε_{Carb})^0.5). Figure 3 plots t_{carb} vs dₚ (or w) for the following geometries of interest to illustrate the method:
- t_{carb} =a1*(dₚ/2)^2/β with β=6 for spherical particles
- t_{carb}= a1*(w/2)^2/β with β=4 as an approximation for cylindrical geometry and carbonation fronts evolving from both sides (exterior and interior) of solid pieces such as Raschig rings (see Figure 2).
- t_{carb}= a1*(w)^2/β with β=2 flat geometry carbonating through one side only (i.e. solids standing on a tray)
- t_{carb}= a1*(w/2)^2/β with β=2 flat geometry carbonating through two sides (i.e solids coating a flat surface exposed to air in both sides)

### b) Pressure drop in the packed bed.

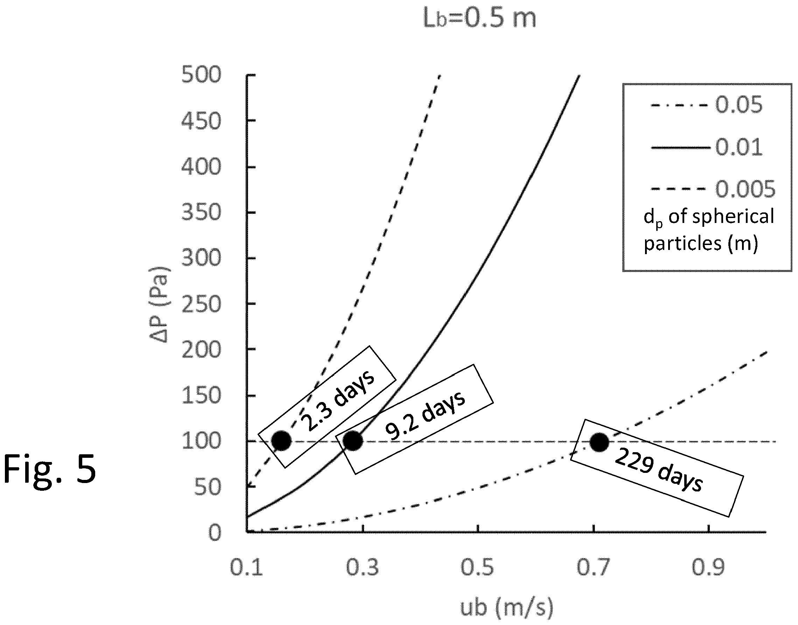

A second component in the air contactor model is the Ergun equation, widely used to calculate pressure drop in a packed bed of solids (for simplicity, the same equation is used here for both random or structured packed beds). This can be expressed as ΔP/L_{b} =a2*u_{b}/dₚ^2+a3*u_{b}^2/dₚ, with a2=150 µ (1-ε_{b})^2/ ε_{b}^3 and a3=1.75 ρ (1- ε_{b})/ ε_{b}^3. Being ΔP the pressure drop (in Pa) of the air passing though the packed bed of length L_{b} (m) in the direction of the air flow in the bed. The velocity of the air through the packed bed, referred to the cross section of the packed bed is u_{b} (m/s), µ and ρ are the air viscosity and density, ε_{b} is the bed porosity or fraction of the total volume of the packed bed not occupied by particles. Using the Ergun equation, Figure 4 plots the ΔP vs dₚ, for a shallow bed of solids (L_{b}=0.5 m) and for a modest air velocity trough the bed (note that 0.3 m/s is well below the standard 1-5 m/s for air contactors of the state-of-the-art, as required to moderate the area of fans required to blow air in the air contactor inlet). As can be seen, only large particles (exceeding 1 cm for ideal ΔP<100 Pa) are allowed in such air contactor. However, using particles with such dₚ demands for long carbonation times as shown in Figure 3, leading to larger inventories of solids in the air contactor and therefore larger air contactor volumes. This is better illustrated in the plot of Figure 5, where the ΔP plot is presented as a function of the velocity of the air through the packed bed of solids, u_{b}, for three values of dₚ (spherical particles). The tags indicate the carbonation times (in days) required for these particles to fully carbonate, under average carbonation conditions indicated in the caption, in a set up designed to operated with a pressure drop in the bed of 100 Pa. However, it must be noted that such carbonation times will only apply if there is a sufficient flow of air (and therefore CO₂) entering the bed of solids. In other words, at too low velocities of air, there can be a limited supply of CO₂ to the carbonating solids in the bed. Increasing such velocity to accelerate carbonation incurs into a fast increase in pressure drop. A compromise must be found to accommodate these trends. The CO₂ mass balance below is the tool to find such compromises and decide on preferred embodiments of the method.

### c) The mass balance of CO₂ in the air contactor.

Using the notation of Figures 1 and 2, a CO₂ mass balance on the air (1) entering the air contactor can be made over a certain period of time, t_{carb}, initiated after the the step i) arranging a packed bed of Ca(OH)₂ solid pieces to fill up a crossection of the air contactor. Said solid pieces have an equivalent diameter dₚ for pressure-drop-related calculations and w for carbonation-conversion calculations (w=dp for spherical particles only). Solid pieces of Ca(OH)₂ are assumed to be exposed during t_{carb}, to a CO₂ concentration calculated as the logarithmic average concentration of CO₂ between the inlet and the outlet of the air contactor. After t_{carb}, the carbonated solids are discharged from the air contactor (step iii). The packed bed has a porosity, ε_{b}, that will depend on shape and diameter characteristic of the solids. For simplicity, for close to spherical particles ε_{b}=0.4 is assumed in all calculations, while for designs involving Raschig rings ε_{b}=0.65. In general, for any particle requiring a carbonation time t_{carb} to reach its maximum conversion Xₘₐₓ, the CO₂ mass balance dictates that the CO₂ that has disappeared from the air passing through the air contactor must be stored as CaCOs in the solids. Therefore: u_{b}*C_{CO2_in}*E_{carb}*t_{carb}= (1- ε_{b})*L_{b} * (1- ε_{Ca(OH)2})*Xₘₐₓ* ρ_{Ca(OH)2} , where Ecarb is the average CO₂ capture efficiency (assumed in all calculations here to be 0.7) and ρ_{Ca(OH)2} = 29900 mol/m³. Introducing in this equation the expressions obtained above for t_{carb}, and the Ergun equation to link L_{b} with ΔP, it is possible to obtain relationships between the particle characteristics and packed bed characteristics that fulfil the previous mass balance. Surprisingly narrow operating windows have been identified, that become preferred embodiments of the method, when it comes to choose the characteristics of the solid pieces of Ca(OH)₂ to find a reasonable compromise between the need to limit pressure drop requirements to blow air through the packed bed of solids (ΔP below 500Pa and the lower the better), the need to limit the volume of the air contactor and total inventory of solids, the need to limit the surface covered by air fans at the air contactor inlet, and the need to simplify solid handling operations inside the air contactor (i.e. avoiding if possible set ups that involve thin layers of Ca(OH)₂ solids and favouring instead the use of simple and low cost structures such as packed beds or gabions of solids).

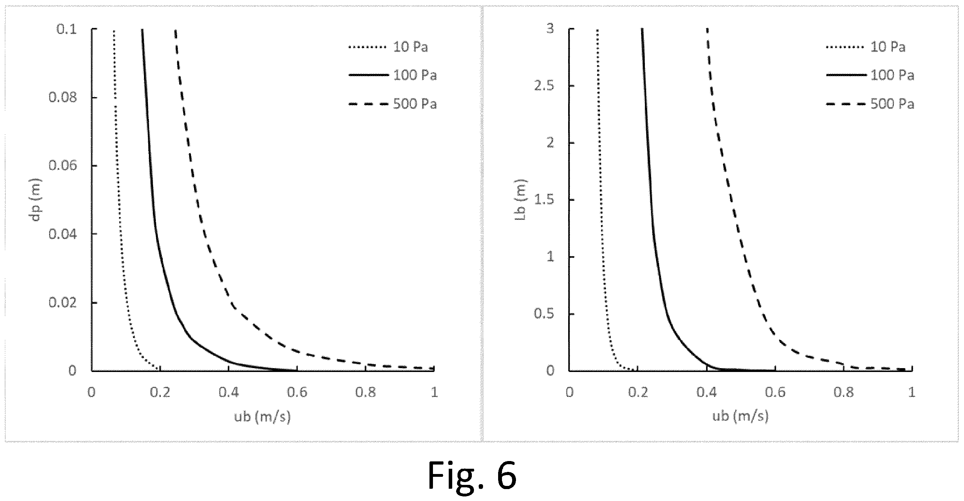

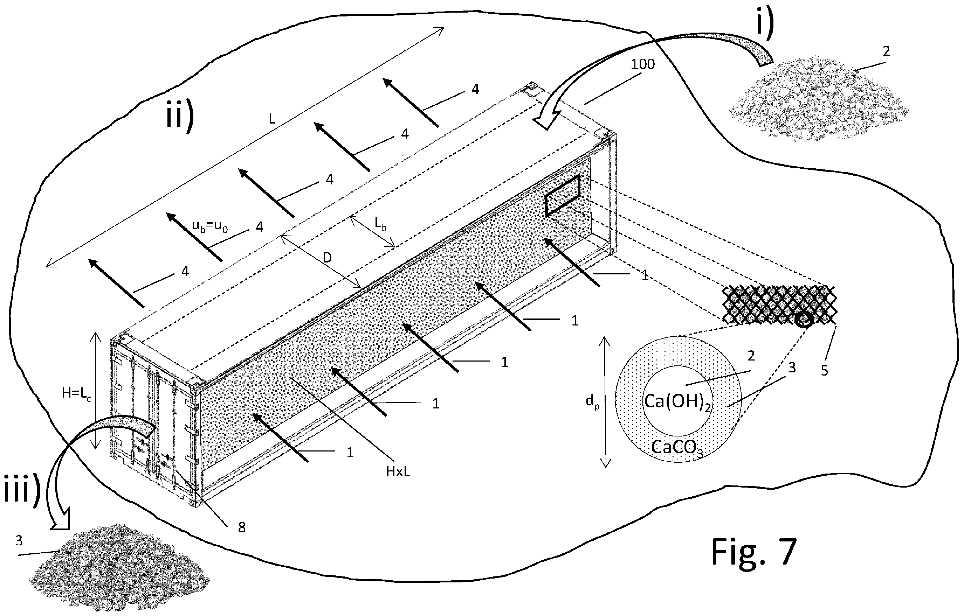

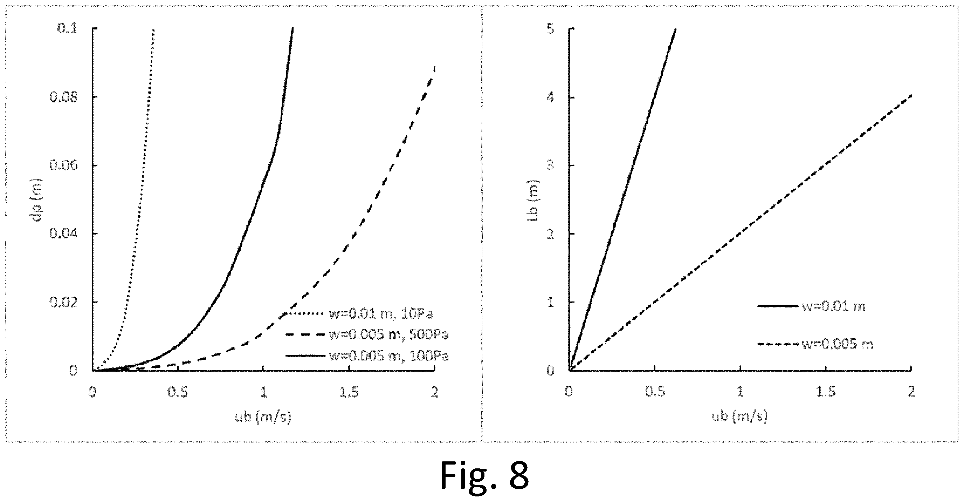

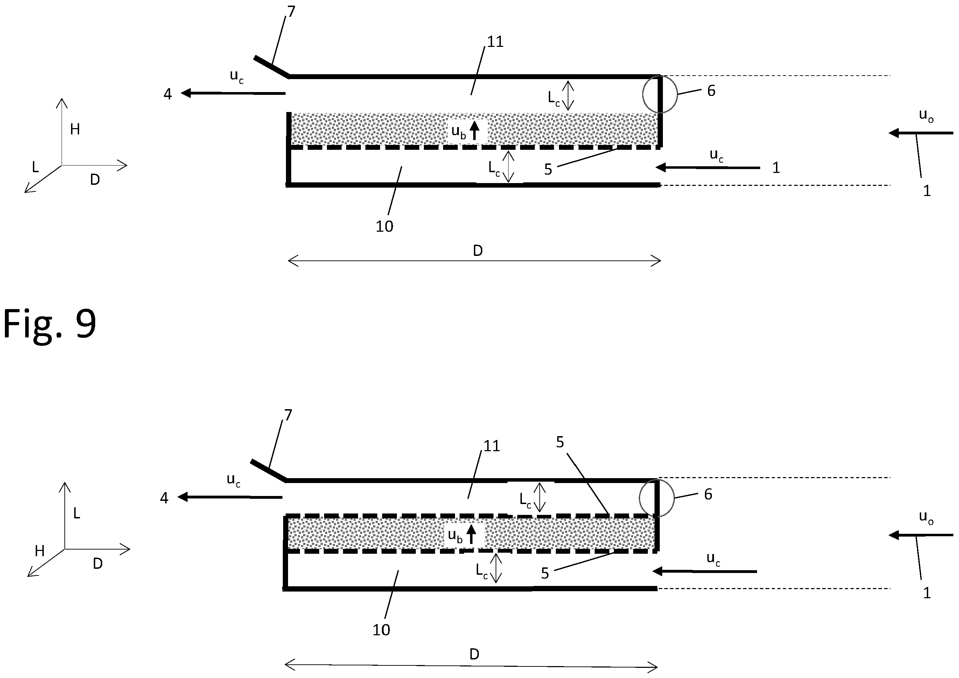

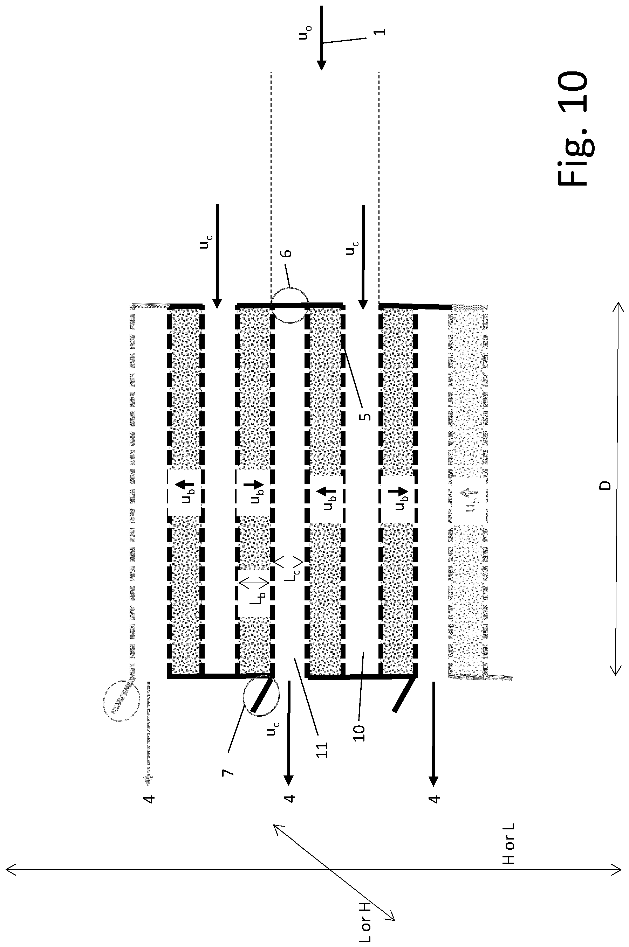

Figure 6 plots solutions of the air contactor model for spherical particles as those carbonating in Figure 3 (β=6). For a given constrain of pressure drop (20, 100 or 500 Pa) and for a given value of u_{b}, the curves in Figure 6-left define the pairs dₚ-L_{b} that fulfill both the CO₂ mass balance defined above, the pressure drop constrain and the need to achieve complete carbonation of the solids before they discharge in step iii) (t_{carb} is linked to dₚ as explained above). It is striking the steepness of the curves, rendering virtually impossible optimum air contactor designs if air velocities in the beds exceed 1 m/s even when ΔP is as high as 500 Pa. As can be seen, the use of high velocities (i.e. u>0.8 m/s) would demand for extremely shallow beds of fine particles, otherwise the solids would not be fully converted to CaCOs and the air would be blown through the bed of solids with a low capture efficiency (and therefore inefficient use of the power of the fans needed to achieve such 500 Pa at the inlet of the bed). In the central case (fans providing a ΔP of 100 Pa in the packed bed), optimum air velocities in the bed must be kept in a narrow interval of u_{b} between 0.20-0.35 m/s to achieve full conversion of the solids using reasonable values of L_{b} (see calculated L_{b} values on Figure 6-right). On the other hand (still using as a reference the curves for ΔP=100Pa) it must be noted that operating at lower velocities than 0.20 would be possible by using larger particles (for example dₚ>0.1m) as these offer less resistance to the pass of air and allow much deeper packed beds as seen in Figure 6-right. But such contactors would have increasingly large volumes (due to the steep increase in L_{b} and increased front air inlet area blown by fans due to the lower air velocity). If L_{b} was arbitrarily shortened to mitigate that trend, the pressure drop would be simply less than 100 Pa and a new interval should be re-calculated. For example, Figure 6 includes the curves for a ΔP=10Pa. When the pressure available to blow air through the bed is so low that only very low velocities (u_{b}<0.15 m/s) are allowed through the bed. Such low velocity is more than one order of magnitude lower than the 1-5 m/s reported in other state-of-the-art air contactors inlets, which would translate into a proportional increase in the area occupied by fans at the air inlet. Preferred embodiments of the method are disclosed, and some specific cases solved in the Examples section below, where the previous problems and constrains can be overcome in three ways:
a) A first preferred embodiment is to apply the method of this invention as a passive carbonation system (i.e. no fans in the front face of the air contactor), relying only on the dynamic pressure exerted by winds on the front face of the air contactor. This is represented in an example of Figure 7. For convenience and clarity, shipping containers (12.19×2.44×2.9 m³) are used as air contactor elements, with the air contactor being a number of containers, N_{c}, piled to form the total air contactor volume or the total air contactor front side exposed to fans or winds. As shown in an Example below, a particular case for a passive carbonation air contactor has been calculated as in Figure 3, using for particles with an equivalent particle diameter of dₚ=0.033, assuming winds to provide an effective ΔP=10Pa between the two sides of the container (which is realistic in many parts of the world with favourable average wind and humidity conditions). To target the capture of 1 Mt_{CO2}/year, the number of containers as shown in Figure 7 would be N_{c}=17200, with a packed bed in the form of a gabion of L_{b}=1.65 m and requiring a discharge of the solids (step iii)) every 100 days to maximize production. For illustration purposes, note in Table 1 of Example, that the number of containers would reduce to N_{c}=3600 and t_{carb}=27 days if high power fans were available to blow air through the bed, as this would allow higher velocities, lower particle sizes and hence lower times required for full carbonation of the solids.
b) A second preferred embodiment is the use of solid pieces of Ca(OH)₂ with a suitable packing geometry so as to decouple their equivalent particle diameter for pressure drop calculations, dₚ, from the characteristic distance for carbonation, w. For example, Raschig rigs with a wall thickness, w, of a few millimetres would carbonate in a few days (see blow-up section of Figure 3) irrespective of their diameter dₚ (that would still be governing the pressure drop in the packed bed). As shown in Figure 8, the air contactor model described above predicts very important benefits when using such solids in the packed bed. The Figure 8 plots show two wall thickness consistent with brick-extruded Ca(OH)₂ solid pieces disclosed in WO2024017935A1 (see Table 1 for other properties assumed on the material). As can be seen, it is possible to design deep packed bed contactors with L_{b}= 4 m (for example using two parallel containers to gain such depth) with gas velocities as high as 2 m/s (when fans allow a ΔP=500Pa). Doubling the area occupied by fans, at a velocity of 1 m/s in the bed, the pressure drop falls to 100 Pa and the number of total containers is similar (N_{c}=1600), which makes also a particularly preferred embodiment.
c) A third preferred embodiment of the method relies on the use of preferred air-contactor designs that can accommodates the modest flow rates of air (between 0.1 to 1 m/s) required through the packed beds, while maintaining inlet gas velocities to the air contactor within the range of those considered optimum (1-5 m/s) to minimize air contactor footprints and fan covered areas, as discussed in the state-of-the-art. Figure 9 discloses a contactor device containing a packed bed of solids on a mesh or distributor (top figure) or contained in a gabion (bottom figure) where the air inlet velocity, uₒ, referred to the cross-section of the front surface HxL of the air contactor device, is directed to an air channel inlet (where velocity is increased to u_{c}), and passes though the bed (at u_{b}) to a second air channel, connected only to the air contactor outlet. Note that aerodynamic features to minimise pressure drop in such transitions of cross-sections and velocities of the air (i.e. to avoid sharp angles and sharp entries of the air) are omitted for simplicity in the Figure. To illustrate the features of such claimed air contactor device, Figure 10 shows a multiplicity of beds arranged in an air contactor using the features of Figure 9, including flaps or air channel doors (6, 7) to allow the air contactor to partially adapt to changing wind directions (in particular if the air contactor is used in passive carbonation applications). As can be seen, the location of the packed beds, occupying full vertical cross-sections LxH of the air contactor volume, split the air contactor in air channels of characteristic dimension Lc. The air entering the air channel at a velocity u_{c}, will evenly permeate through the packed beds at a velocity u_{b}=u_{c}×L_{c}/L_{b}. Likewise, the air velocity at the inlet of the air channel, u_{c}, can be estimated from the air velocity, u₀ (between 1-5 m/s when blown by fans), by multiplying u₀by the ratio (2L_{b}+2L_{c})/L_{c}. Preferred embodiments to reduce the complexity of the air contactor, avoiding the use of thin air channels that would introduce additional pressure drop (not accounted for in the current air contactor model but checked to be negligible using available correlations for pressure drops in air pipes), recommend values of L_{c} higher than 0.1 m and a depth (D) between 2 to 5 m. As before, preferred embodiments of the air contactor will use containerized dimensions as shown in Figure 11 (with D close to the width of the container at 2.44 m), to minimize building cost by exploiting the robustness and low cost of shipping container and by installing the packed bed of solids inside the air contactor in the form of gabions, as illustrated in Figure 11. As shown in Table 1 for a particular case of Figure 11, where D/L_{c}=9 this air contactor design allows the use of packed beds of Ca(OH)₂ solid pieces in the form of particles packed in gabions or trays with a mesh or perforated plate to sustain the bed. The use of such solids is assumed to have the advantage of being lower specific cost (per tonne of Ca(OH)₂ material) than the equivalent solid pieces having packing shapes discussed above for other preferred embodiments. As can be seen in the examples adopted for the design (Table 1), preferred air contactor systems also emerge for passive carbonation applications (represented in Table 1 by a pressure drop in the bed as low as 10Pa) when using this preferred devices. On the other hand, when using standard fans as used in other air capture systems designs (represented by ΔP=100Pa in Table 1), or High Power (HP) fans overcoming a ΔP=500Pa in the beds, preferred designs emerge with the smallest air contactor (lower number of containers, with Nc=750 in the example of Table 1).

The skilled in the art will choose among the previous alternatives using cost considerations to evaluate the different preferred embodiments, considering local market conditions and availability of natural resources (i.e. wind etc.). In general, solutions demanding for extruded or conformed solid pieces of Ca(OH)₂ will tend to increase the cost of manufacture of such materials respect to more conventional sieved particles of Ca(OH)₂ mortars, solutions demanding for fans will increased energy consumption respect to passive carbonation embodiments, but will reduce the air contactor volume footprint.

The skilled in the art will be able to correct the previous designs to applications of the method to capture CO₂ from flue gases with a CO₂ content below 1%vol CO₂ at below 50°C by directing said flue gases to the air contactor inlets of the devices disclosed above. The limit at around 1%vol concentration of CO₂ comes from the known need to keep relative humidity over 50% to reach maximum carbonation conversions of the solids. Due to the exothermic nature of the carbonation reaction of Ca(OH)2 (the -72 kJ/mol can heat up the air by up to 20°C) such restriction becomes problematic when the temperature of the gas increases over 50°C (assuming there is no source of steam to compensate for the decrease in relative humidity when increasing temperature). When there is a source of water at low cost (for example when the method is applied in environments where close to the ocean or other large bodies of water) the methods of this invention can even be applied to from flue gases with a CO₂ content between 1-5%volCO₂ by introducing steps of cooling or quenching with air or water the flue gases to less than 60°C before they enter the air contactor and by intercooling when they exceed temperatures of 70°C at any point in the interior of the air contactor.

### EXAMPLES

Table 1 includes several examples of application of the method, using the model described in the previous section to identify optimum dimensions of the solids and associated dimensions of the packed beds arranged in air contactors to capture 1MtCO₂/year. For simplicity, all designs have been adopted to fit in the dimensions of standard shipping containers. But such feature is unnecessary if other mechanical designs to arrange the packed bed of solids within the air contactor are considered more economic (for example in air contactors using trays or stacks of trays with a mesh or perforated plate at the bottom). The examples and the drawings are examples used for illustrative purposes and should not be understood in a restrictive manner.

**Table 1. Examples of designs of air contactor as referred in the Detailed Description**

| | | Pressure drop in the packed bed | | |
|---|---|---|---|---|
| | | 10 Pa (i.e. passive) | 100 Pa (fans) | 500 Pa (HP fans) |
| Particles | Single packed bed | uₒ=u_{b}=0.09 m/s | uₒ= u_{b}=0.24 m/s | u₀= u_{b}=0.43 m/s |
| ε_{b}=0.4 | | dₚ=0.033 m | dₚ =0.019 m | dₚ =0.018 m |
| β=6 | | L_{b}=1.65 m | L_{b} =1.4 m | L_{b} =2.1 m |
| ε_{Ca(OH)2}=0.5 | | t_{carb}=100 days | t_{carb}=32 days | tcarb=27 days |
| | | N_{c}=17200 | N_{c}=6500 | N_{c}=3600 |
| | Multi-beds in trays or gabions D/Lc=9 | u_{b}= 0.11 m/s | u_{b}= 0.30 m/s | u_{b}= 0.58 m/s |
| | | u_{c}=2.2 m/s | u_{c}=5.4 m/s | u_{c}=10.4 m/s |
| | | uₒ=0.57 | uₒ=1.12 | uₒ=2.1 m/s |
| | | dₚ =0.015 m | dₚ =0.0087 m | dₚ =0.0065 m |
| | | L_{b} =0.41 m | L_{b} =0.38 m | L_{b} =0.4 m |
| | | t_{carb}=20 days | t_{carb}=7 days | t_{carb}=3.8 days |
| | | N_{c}=2700 | N_{c}= 1400 | N_{c}=750 |
| Packing pieces | Single packed bed | w=0.01 m | w=0.005 m | w=0.005 m |
| | | uₒ=u_{b}=0.3 m/s | uₒ= u_{b}= 1 m/s | uₒ= u_{b}= 2 m/s |
| ε_{b}=0.65 | | dₚ =0.06 m | dₚ =0.055 m | dₚ =0.088 m |
| β=4 | | L_{b} =2.42 m | L_{b} =2.0 m | L_{b} =4.0 m |
| ε_{Ca(OH)2}=0.35 | | t_{carb}=33 days | t_{carb}=8.3 days | t_{carb}=8.3 days |
| | | N_{c}=5100 | N_{c}= 1600 | N_{c}*=1560 |

| | | | | |
|---|---|---|---|---|
| Common parameters in the above examples: target CO₂ capture flow=1 MtCO₂/year, inlet concentration 450 ppmv, Ecarb=0.7, Xₘₐₓ=0.7, C_{CO2log}=0.0111 mol/m3, air flow rate 54909 m3/s, D_{CO2}=0.000016 m2/s, T=15°C, viscosity=0.000018 kg/ms, air density=1.22 kg/m³, molar density of Ca(OH)₂=29900 mol/m³, molar density of CaCO₃=27100 mol/m³, shape factor=1, shipping container dimensions (H-L-D, in m = 12.19-2.9-2.44). * The cross-section of the air container is equivalent to 780 containers arranged as in Figure 7, but two adjacent containers (with total D=4.88 m) are needed to accommodate the 4 m of packed bed depth, L_{b}. | | | | |

## Claims

1. A method of capturing CO₂ from air, vitiated air or other gases containing less than 5%v CO₂ by contacting them at temperature below 50°C with porous solid pieces of Ca(OH)₂ to produce CaCOs, the method being **characterized by** the following steps being repeated at least once:
i) a step of arranging at least one packed bed of solid pieces of Ca(OH)₂ inside an air contactor comprising a volume of dimensions HxLxD, being H the height, L the length and D the depth of the air contactor so that the cross-section of the at least one packed bed of solid pieces of Ca(OH)₂ occupies an entire cross-section (HxL or HxD or LxD) of the air contactor, the entire cross-sections being the height x length section, the height x depth section or the length x depth section;
ii) a step of blowing air through one entire cross-section of the entire cross-sections of the air contactor; and
iii) a step of discharging the at least one packed bed solids already carbonated as CaCOs solids after a residence time in the air contactor of between 1 day to 1 year.

2. The method of claim 1 further comprising an additional step of pre-screening particles of Ca(OH)₂ having an equivalent particle diameter between 1-50 mm and using them in the step of arranging at least one packed bed of solid pieces of Ca(OH)₂ inside an air contactor.

3. The method of claim 1 further comprising an additional step of manufacturing by extrusion or any other solid conforming technique the solid pieces of Ca(OH)₂ in the form of Raschig rings or other packing forms with an equivalent diameter between 5-150 mm and a wall thickness between 2-10 mm.

4. The method of any of claims 1-3 wherein the step of blowing air through one entire cross-section of the entire cross-sections of the air contactor is carried out establishing a pressure drop of the air through the packed bed between 10 to 500 Pa.

5. The method of any of claims 1-4 wherein the step of blowing air through the one entire cross-section of the entire cross-sections of the air contactor is achieved by exposing to head winds an open air inlet face (HxL) of the air contactor

6. The method of any of claims 1-4 wherein the step of blowing air through one entire cross-section of the entire cross-sections of the air contactor is carried out by blowing air at velocities between 0.2-2.5 m/s through the open-air inlet face (HxL) of the air contactor

7. The method of any one of claims 1-6 wherein the step of arranging at least one packed bed of solid pieces of Ca(OH)₂ inside an air contactor is carried out using trays disposed in horizontal position along the air contactor and disposing a mesh or perforated surface in the bottom of each tray to sustain the bed of solid pieces of Ca(OH).

8. The method of any of claims 1-7 wherein the step of arranging at least one packed bed of solid pieces of Ca(OH)₂ inside an air contactor is carried out arranging vertically the bed of solid pieces of Ca(OH)₂, standing on the floor of the air contactor as a gabion having two surfaces made with a mesh or perforated surface separated by a distance that coincides with the length of the packed bed.

9. Air contactor device to carry out the methods of any of claims 1-8 comprising an air contactor inlet and an air contactor outlet and opening/closing gates to upload and discharge solids or stacks of solid pieces of Ca(OH)₂ to/from the air contactor, **characterized in that** it further comprises at least one mesh or perforated surface covering a full cross-section of the interior of the air contactor (HxD or LxD or HxL) being divided it in at least one pair of air channels free of solids, with each of the air channels in the pair being in contact with each of the sides of the bed of solid pieces of Ca(OH)₂ and said air channels further comprising means to connect each air channel in one pair to only the air contactor inlet or only the air contactor outlet, so that when one air channel inlet is open and its air channel outlet is closed the other air channel in the pair has its air channel outlet open and its air channel inlet closed.

10. The air contactor device of claim 9 comprising one of its air inlet dimensions (H or L) divided in a multiplicity of sections of equal length that results from the sum of the length of the bed of solid pieces of Ca(OH)₂, L_{b}, and the width of the air channel, L_{c}; while the other dimension of each one of the sections being the other inlet dimension (L or H, respectively).

11. The air contactor device of any of claims 9-10 where the depth (L_{b}) is between 0.5 to 5 m.

12. The air contactor device of claim 10 comprising means configured to close/open individual air channel inlets and outlets.

13. The method of any of claims 1-8 further comprising a step of capturing CO₂ from vitiated air in buildings or other living spaces by directing said vitiated air to the air contactor inlets of the air contactor device of any one of claims 9-12.

14. The method of any of claims 1-8 further comprising a step of capturing CO₂ from flue gases with a CO₂ content below 1%volCO₂ by directing said flue gases at temperatures below 50°C to the air contactor inlets of the air contactor device of any of claims 9-12.

15. The method of any of claims 1-14 wherein the air, the vitiated air or the other gases containing less than 5%volCO₂ are flue gases with a CO₂ content between 1-5%volCO₂ further comprising a step of cooling or quenching with air or water the flue gases to less than 50°C before they enter the air contactor and when they reach 70°C at any point in the interior of the air contactor.
